# EUROPÄISCHE PATENTSCHRIFT

(11) **EP 0 634 584 B1**
(45) Veröffentlichungstag und Bekanntmachung des Hinweises auf die Patenterteilung: **10.09.1997**
(21) Anmeldenummer: 94109527.5
(22) Anmeldetag: 21.06.1994
(51) Int. Cl.: F16D 57/04

(54) **Hydrodynamischer Retarder**
Hydrodynamic retarder
Ralentisseur hydrodynamique

(30) Priorität: 13.07.1993 DE 4323342
(43) Veröffentlichungstag der Anmeldung: 18.01.1995
(73) Patentinhaber: VOITH TURBO GMBH & CO. KG, D-74564 Crailsheim (DE)
(72) Erfinder: Vogelsang, Klaus, D-74564 Crailsheim (DE)
(74) Vertreter: Weitzel, Wolfgang, Dr.-Ing. Patentanwalt

(56) Entgegenhaltungen:
- DE-C- 3 113 408
- SOVIET PATENTS ABSTRACTS Section PQ, Week 9311, 5. Mai 1993 Derwent Publications Ltd., London, GB; Class Q56, AN 93-092007 & SU-A-1 724 939 (SUMY MECH) 7. April 1992
- SOVIET PATENTS ABSTRACTS Section PQ, Week 9336, 27. Oktober 1993 Derwent Publications Ltd., London, GB; Class Q56, AN 93-286445 & SU-A-1 760 172 (UNIV LUMUMBA) 7. September 1992

## Beschreibung

Die Erfindung betrifft einen hydrodynamischen Retarder gemäß dem Oberbegriff von Anspruch 1.

Retarder dieser Gattung sind aus zahlreichen Veröffentlichungen bekannt. Nur beispielsweise wird auf DE 31 13 408 C1 verwiesen.

Die Weiterentwicklung des Retarders verlief bisher hauptsächlich unter dem Gesichtspunkt, eine möglichst hohe Leistungsdichte zu erzielen, wobei man eine möglichst ideale Gestaltung der am Energieaustausch beteiligten Bauteile, vor allem des Rotors und des Stators, anstrebte. Auch war man bestrebt, den Retarder derart zu gestalten, daß er in einer gewünschten Weise bei verschiedenen Betriebszuständen betrieben werden kann.

Die bis heute erreichte hohe Leistungsdichte moderner Retarder hat zu einer entsprechend hohen Belastung der an der Ölführung beteiligten Bauteile geführt. Dies hat wiederum eine starke Geräuschentwicklung zufolge, was im Straßenverkehr unerwünscht ist, vor allem bei Omnibussen.

Es hat nicht an Versuchen gefehlt, den vom Retarder bei dessen Arbeiten erzeugten Geräuschpegel abzusenken, wohlgemerkt bei gleichzeitiger Erhaltung der hohen Leistungsdichte.

Um dies zu erreichen, hat man lediglich Sekundärmaßnahmen ergriffen, die nicht die eigentliche Entstehung des Geräusches bekämpfen können, sondern lediglich dessen Auswirkungen. Hierzu gehören eine Verstärkung von Gehäuseteilen oder das Anordnen von Dämmkapseln, die den Retarder gänzlich einhüllen. Beide Maßnahmen sind relativ teuer, haben einen erheblichen Montageaufwand, vergrößern den Bauraum, was besonders unerwünscht ist und sind letzten

Endes wenig wirkungsvoll.

Aus der Sicht des Akustikfachmannes käme eine Reduzierung der Schaufelzahlen von Rotor und Stator in Betracht, um die Häufigkeit der periodisch wiederkehrenden "Strömungsstöße" zu verringern. Will man die Energiedichte und damit die Leistungsaufnahme durch derartige Maßnahmen nicht verringern, so führt dies zwangsläufig zu einer Energieerhöhung der "Strömungsstöße" und damit zu einer noch stärkeren Schwingungsanregung der beteiligten Bauteile sowie der Ölströmung.

Es gab demgemäß bisher keine primären Maßnahmen, die das Übel an der Wurzel packen.

Der Erfindung liegt die Aufgabe zugrunde, einen Retarder gemäß dem Gattungsbegriff derart zu gestalten, daß sowohl die Energiedichte erhalten bleibt, als auch der Geräuschpegel gegenüber bekannten Retardern deutlich gesenkt wird.

Der Erfinder ist einen völlig anderen Weg gegangen. Er hat nämlich die Schaufelzahlen erhöht, und zwar wohlgemerkt nur diejenige des Rotors, so daß der Rotor eine andere, und zwar eine höhere Schaufelzahl aufweist als der Stator. Gute Ergebnisse haben sich gezeigt bei einer Erhöhung der Rotorschaufelzahl in Bezug auf die Statorschaufelzahl um das 1,3-fache.

Versuche haben erwiesen, daß die Energiedichte bei Anwendung der erfindungsgemäßen Maßnahmen voll und ganz erhalten bleibt.

Die Erfindung ist anhand der Zeichnungen näher erläutert. Darin ist im einzelnen folgendes dargestellt:
Figur 1 zeigt einen Retarder in schematischer Darstellung im Längsschnitt.
Figur 2 zeigt - noch stärker schematisiert - ein Retarder-Profil im Querschnitt.

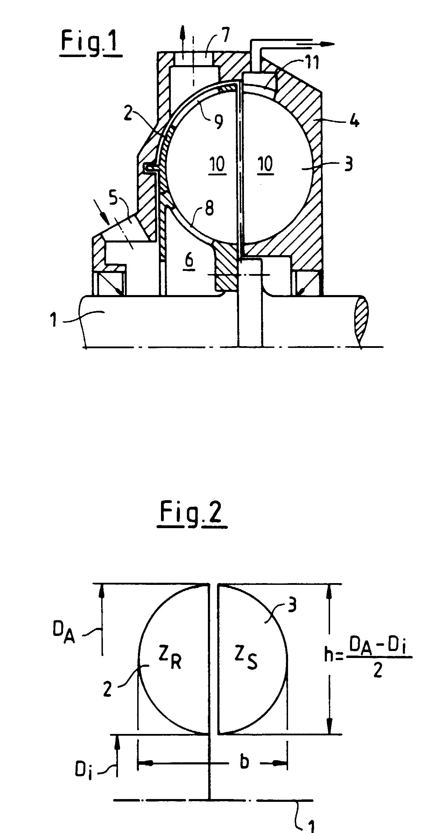

Der in Figur 1 gezeigte Retarder weist eine Antriebswelle 1 auf, auf der ein Rotor-Schaufelrad 2 aufgekeilt ist, ferner ein Stator-Schaufelrad 3, das in einem Gehäuse 4 drehfest angeordnet ist. Die Arbeitsflüssigkeit wird dem Retarder durch einen Zulaufkanal 5 über eine nicht dargestellte Steuereinrichtung zugeführt. Dabei gelangt sie zunächst in einen Verteilerraum 6. Sie wird aus einem Austrittskanal 7 wieder abgeführt. Am Rotor-Schaufelrad befinden sich im radial inneren Bereich Füllschlitze 8, sowie im radial äußeren Bereich Entleerschlitze 9, die jedoch für die Erfindung ohne Bedeutung sind. Zwischen dem Rotor- und dem Stator-Schaufelrad befindet sich ein torusförmiger Arbeitsraum 10, der über die Füll- und Entleerschlitze 8 und 9 gefüllt und entleert wird.

Die stark schematisierte Darstellung der Figur 2 läßt den Querschnitt des Profils erkennen, sowie die Anordnung in Bezug zur Rotorwelle.

## Patentansprüche

1. Hydrodynamischer Retarder mit den folgenden Merkmalen:
1.1 ein Gehäuse, das mit einer Arbeitsflüssigkeit füllbar und von dieser entleerbar ist;
1.2 ein Rotor-Schaufelrad, das eine Anzahl Z_{R} Schaufeln aufweist;
1.3 mit einem Stator-Schaufelrad, das eine Anzahl Z_{S} Schaufeln aufweist;
1.4 mit einem Profil-Außendurchmesser D_{A};
1.5 mit einem Profil-Innendurchmesser D_{I};
gekennzeichnet durch die folgenden Merkmale:
1.6 die Rotor-Schaufelzahl Z_{R} beträgt das 1,2-fache bis 1,5-fache der Stator-Schaufelzahl Z_{S}, vorzugsweise das 1,35-fache.

## Claims

1. Hydrodynamic retarder having the following features:
1.1 a housing which can be filled with an operating liquid and emptied thereof;
1.2 a rotor-blade wheel which comprises a number Z_{R} of blades;
1.3 a stator-blade wheel which has a number Zₛ of blades;
1.4 a profile outer diameter D_{A};
1.5 a profile inner diameter D_{I};
characterised by the following features:
1.6 the rotor-blade number Z_{R} is 1.2 to 1,5 times the stator-blade number Z_{S}, preferably 1.35 times.

## Revendications

1. Ralentisseur hydrodynamique, présentant les propriétés ci-après :
1.1 un carter, susceptible d'être rempli d'un liquide de travail et d'en être vidé;
1.2 une roue à aubes faisant office de rotor, présentant un nombre **Z**_{R} d'aubes;
1.3 avec une roue à aubes faisant office de stator, présentant un nombre **Z**_{S} d'aubes
1.4 avec un diamètre extérieur de profil **D**_{A};
1.5 avec un diamètre intérieur de profil **D**_{I};
caractérisé par les propriétés ci-après :
1.6 le nombre **Z**_{R} d'aubes de rotor est compris dans la plage allant de 1,2 fois à 1,5 fois, de préférence de valeur 1,35 fois , le nombre **Z**_{S} d'aubes de stator.
